Europäisches Patentamt

European Patent Office

Office européen des brevets

(19)

(11) EP 0 816 866 B1

(12) **FASCICULE DE BREVET EUROPEEN**

(45) Date de publication et mention
de la délivrance du brevet:
**24.10.2001 Bulletin 2001/43**

(51) Int Cl.$^7$: **G01S 13/34**

(21) Numéro de dépôt: **97401600.8**

(22) Date de dépôt: **04.07.1997**

(54) **Procédé d'analyse spectrale, notamment pour radioaltimètre de type FM/CW à traitement numérique**

Verfahren zur Spektralanalyse, insbesondere für FM/CW-Funkhöhenmesser mit digitaler Signalverarbeitung

Method for spectral analysis, in particular for a FM/CW radio altimeter with digital signal processing

(84) Etats contractants désignés:
**DE FR GB IT NL SE**

(30) Priorité: **05.07.1996 FR 9608391**

(43) Date de publication de la demande:
**07.01.1998 Bulletin 1998/02**

(73) Titulaire: **Thales**
**75008 Paris (FR)**

(72) Inventeurs:
• **Hethuin, Serge**
**94117 Arcueil Cedex (FR)**

• **Bourde, Gilles**
**94117 Arcueil Cedex (FR)**

(74) Mandataire: **Dudouit, Isabelle et al**
**Thomsom-CSF**
**Propriété Industrielle**
**13, avenue Président Salvador Allende**
**94117 Arcueil Cedex (FR)**

(56) Documents cités:
**FR-A- 2 650 413**

**Description**

L'invention concerne un procédé d'analyse spectrale, notamment pour un radioaltimètre de type FM/CW à traitement numérique.

Dans ces altimètres, un signal récurrent modulé selon une rampe linéaire de fréquence dite "dent de scie" est émis en direction du sol. Après réflexion sur le sol le signal reçu est mélangé avec le signal émis. La différence de fréquence entre les deux signaux, c'est-à-dire la fréquence de battement, est directement proportionnelle au temps de propagation - donc à la hauteur - et à la pente de la rampe de fréquence.

Compte tenu de la complexité du phénomène de réflexion et des nombreuses rétrodiffusions captées, c'est en fait un ensemble de signaux décalés, présentant des amplitudes et des fréquences différentes qui est reçu. Le signal reçu est donc en réalité un signal composite, et c'est à partir du spectre du signal de battement que peut être déterminée la hauteur de vol.

L'invention s'applique à l'analyse spectrale du signal de battement dans un radioaltimètre de ce type, mais n'est cependant pas limitée à cette application particulière.

Cette analyse spectrale est aujourd'hui réalisée par des moyens numériques, qui procurent une plus grande précision, une meilleure discrimination des échos reçus, etc. Pour permettre le traitement de ce signal, il est procédé, de manière bien connue, à un échantillonnage du signal de battement.

Une difficulté particulière se présente cependant dans le cas des faibles hauteurs de vol. En effet, pour garder le signal de battement dans une bande de fréquences limitée à quelques centaines de kilohertz et éviter donc une dynamique trop importante qui rendrait difficile une analyse uniforme du signal, la période des dents de scie est asservie à la hauteur survolée. Pour une hauteur variant de quelques pieds à soixante mille pieds environ, la période des dents de scie varie d'environ 64 µs à 100 ms, soit une dynamique de l'ordre de $10^4$, de manière à conserver soit une fréquence de battement constante de 25 kHz ou 100 kHz, soit une fréquence contenue dans des limites étroites, par exemple entre 60 kHz et 100 kHz ; dans ce deuxième cas, si la fréquence de battement tend à sortir de cette plage, elle y est ramenée par l'asservissement.

Pour des hauteurs importantes, plusieurs centaines de milliers d'échantillons sont disponibles par dent de scie, du fait qu'une fréquence d'échantillonnage élevée, généralement égale à 256 kHz, est utilisée ; plusieurs procédés connus d'analyse spectrale peuvent être appliqués de façon satisfaisante pour obtenir le résultat recherché : transformée rapide de Fourier, transformée de Fourier d'une fonction d'autocorrélation, ou encore procédés paramétriques du type moindres carrés utilisant des algorithmes tels que l'algorithme de Burg appliqué directement aux échantillons ou de Levinson appliqué à des coefficients d'autocorrélation.

En revanche, pour les faibles hauteurs, le nombre d'échantillons devient très réduit : à l'extrême, pour une dent de scie de 64 µs et une fréquence d'échantillonnage de 256 kHz il est théoriquement d'environ 16 échantillons. En pratique il est encore plus réduit, de l'ordre de 10 échantillons utiles au maximum, en effet quelques échantillons sont perdus du fait du retard apporté par l'écho.

Pour pallier cette difficulté un procédé d'analyse spectrale différent peut être utilisé pour les faibles hauteurs, généralement à base de méthodes adaptatives d'estimation telles que la méthode du gradient ou des moindres carrés récursifs, procédé qui évalue des coefficients de prédiction linéaire réestimés à chaque échantillon. Cette manière de procéder souffre cependant d'une mauvaise fiabilité lorsque le rapport signal/bruit est faible et ne supporte pas les ruptures de phase entre deux dents de scie successives, c'est-à-dire entre le dernier échantillon d'une dent de scie et le premier échantillon de la dent de scie suivante.

Le brevet français FR-A-2 650 413 décrit un circuit mettant en oeuvre les divers procédés d'analyse spectrale mentionnés ci-dessus, avec un système permettant de sélectionner à la demande une méthode d'analyse telle que transformée de Fourier discrète, méthode du gradient ou méthode de Levinson et les paramètres pour la mise en oeuvre de la méthode sélectionnée.

Cette solution, si elle permet de choisir une méthode mieux appropriée à l'analyse spectrale dans le cas des faibles hauteurs, ne pallie cependant pas les inconvénients inhérents à cette méthode, notamment son comportement peu satisfaisant en présence d'un mauvais rapport signal/bruit.

L'invention a pour but de proposer un nouveau procédé d'analyse spectrale permettant d'éviter ou, pour le moins, de réduire les divers inconvénients résultant du faible nombre d'échantillons disponibles dans le cas des rampes très courtes.

Ceci est obtenu par un procédé qui consiste :

- à baser l'analyse spectrale sur le calcul de coefficients d'autocorrélation, pour obtenir un comportement satisfaisant même en présence d'un mauvais rapport signal/bruit,
- à limiter le nombre de coefficients d'autocorrélation à calculer, pour pouvoir effectuer ce calcul sur une même dent de scie, même très courte, ceci impliquant alors d'extraire les coefficients de prédiction linéaire par une méthode à moindres carrés à partir des coefficients d'autocorrélation,

- à utiliser un moyen permettant le calcul des coefficients d'autocorrélation sur une durée plus longue que celle des dents de scie courtes, car la consistance de l'estimateur de la fonction d'autocorrélation n'est obtenue que si l'horizon d'intégration (integration length dans la littérature anglo-saxonne) est suffisamment important.

Pour ce faire, les coefficients d'autocorrélation sont calculés localement sur une même dent de scie et combinés à des coefficients calculés sur les dents de scie précédentes, de manière à donner des coefficients d'autocorrélation qualifiés de "globaux", à partir desquels sont extraits, de manière en elle-même connue, des coefficients de prédiction linéaire permettant de restituer les composantes spectrales recherchées ; de façon à ne pas garder indéfiniment en mémoire les précédentes valeurs des coefficients locaux, il est prévu un mécanisme d'"oubli" exponentiel paramétrable et proportionnel aux durées des dents de scie en usage à l'instant du calcul.

En d'autres termes, l'invention concerne un procédé d'analyse spectrale, notamment pour un radioaltimètre de type FM/CW à traitement numérique, comportant les étapes successives suivantes :

a) moduler en fréquence un signal d'émission selon une loi de variation en dents de scie à fréquence de récurrence donnée,

b) émettre ce signal modulé, à le recevoir après réflexion et à mélanger le signal reçu au signal émis de manière à donner un signal de battement,

c) numériser ce signal de battement, de manière à donner une succession d'échantillons numériques de signal délivrés pendant la durée de chaque dent de scie,

et d) effectuer une analyse spectrale de ces échantillons afin de délivrer une information de spectre,

    caractérisé en ce que cette analyse spectrale comporte les étapes suivantes :

e) déterminer à chaque dent de scie une série de coefficients d'autocorrélation locaux permettant de définir les composantes spectrales, à partir des échantillons de signal courants c'est-à-dire reçus au cours de cette même dent de scie,

f) déterminer une série de coefficients d'autocorrélation globaux par calcul d'une somme pondérée des coefficients d'autocorrélation locaux courants et des coefficients d'autocorrélation globaux antérieurs, calculés au cours des dents de scie précédentes,

g) déterminer à partir des coefficients d'autocorrélation globaux une série de coefficients d'un polynôme prédicteur par l'une des deux méthodes dites respectivement des moindres carrés et de transformée de Fourier,

h) restituer des composantes spectrales à partir de la série de coefficients d'un polynôme prédicteur ainsi déterminée.

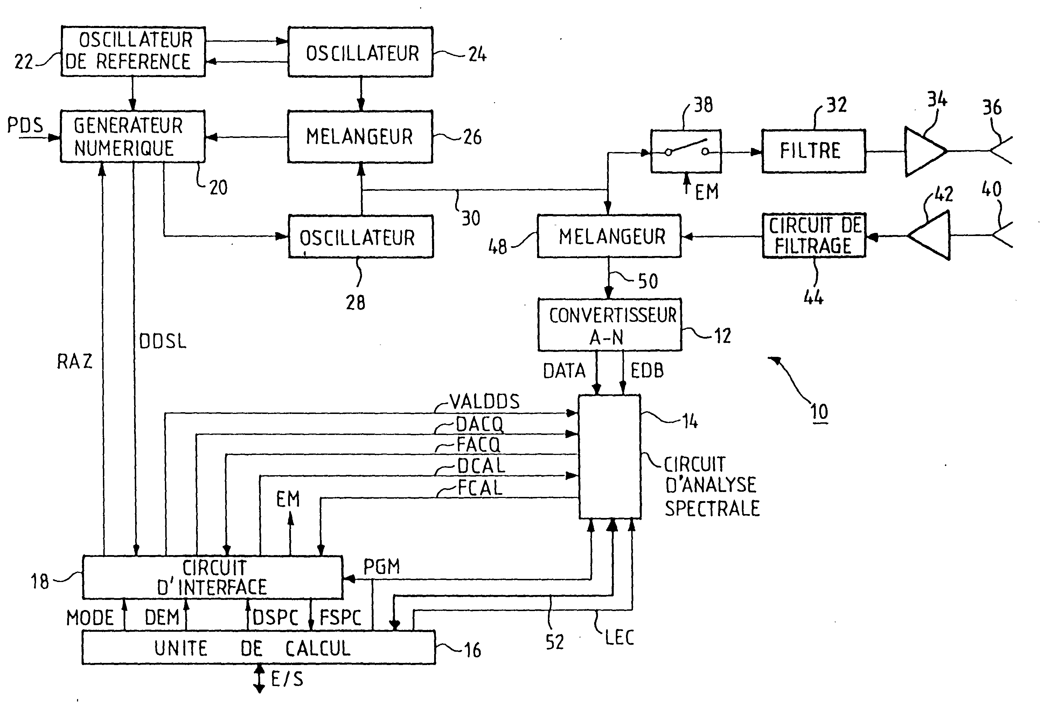

La présente invention sera mieux comprise et d'autres caractéristiques apparaîtront à l'aide de la description ci-après et de la figure unique annexée, qui représente un schéma synoptique des divers circuits d'un radioaltimètre susceptible de mettre en oeuvre le procédé selon l'invention.

Sur la figure, la référence 10 désigne les divers circuits analogiques d'émission/réception du signal modulé. Ce signal modulé, après réception, est numérisé par un convertisseur analogique-numérique 12 pour donner une série d'échantillons numériques DATA. Cette série d'échantillons numériques est appliquée à un circuit d'analyse spectrale 14, en fin de numérisation, en même temps qu'un signal d'activation EDB, "échantillons disponibles", signal basé sur un signal d'horloge d'échantillonnage. La numérisation est opérée à une fréquence d'échantillonnage de 256 kHz avec des échantillons représentés sur 8 bits, dans l'exemple décrit, et éventuellement sur 10, 12, 14 bits.

Le circuit d'analyse spectrale 14 coopère avec une unité de calcul 16 en architecture numérique 16 bits de type processeur de gestion qui, dans l'exemple décrit, est un composant de type *68340* ; ce peut être aussi un processeur de signal, par exemple un composant TMS *320C30*, exécutant un logiciel séquencé. Un circuit 18 assure une fonction d'interface de contrôle entre le circuit d'analyse spectrale 14 et l'unité de calcul 16, notamment pour mettre en oeuvre deux modes différents d'émission, continue ou discontinue.

Les circuits analogiques 10 comportent un générateur numérique 20 piloté par un oscillateur de référence 22 de 1,05 GHz de fréquence dans l'exemple décrit, et paramétré par des informations PDS de pente de dent de scie et RAZ de remise à zéro pour synchroniser le début de la dent de scie ; cette information RAZ est produite par le circuit d'interface 18. Un oscillateur 24 est asservi par l'oscillateur 22. Cet oscillateur 24 est un oscillateur à contrôle de tension ou VCO d'après le sigle de son appellation dans la littérature anglo-saxonne : *Voltage Controlled Oscillator ;* il délivre une fréquence fixe de 4,2 GHz sur la première entrée d'un mélangeur 26 qui reçoit sur sa seconde entrée le signal d'un oscillateur 28 de type VCO. Le mélangeur 26 fournit au générateur numérique 20 un signal dont la fréquence correspond à la différence entre les fréquences des oscillateurs 24 et 28. Le générateur numérique 20, à partir des informations RAZ et PDS, fabrique sous forme numérique des rampes de fréquence. L'oscillateur 28 est commandé en tension par un signal d'erreur provenant du générateur numérique 20, de sorte que la tension de sortie du mélangeur 26 est la recopie analogique de la tension générée sous forme de rampes de fréquence numériques par le générateur 20. Dans l'exemple décrit l'oscillateur 28 fournit ainsi une rampe de fréquence qui varie de 4,3 à 4,4 GHz et le mélangeur une rampe de fréquence qui varie de 4,3 - 4,2 GHz = 100 MHz à 4,4 - 4,2 GHz = 200 MHz. Le signal de sortie à 4,3 - 4,4 GHz en rampe linéaire produit par cet oscillateur 28 est appliqué via une ligne 30 à un filtre 32, suivi d'un amplificateur de puissance 34 et d'une antenne d'émission 36. Pour une émission discontinue, un interrupteur 38 est commandé par un signal EM produit par le circuit d'interface 18.

Le circuit de réception comporte une antenne 40, un amplificateur faible bruit 42, un circuit de filtrage 44. Le signal reçu est appliqué à une entrée d'un mélangeur 48 recevant sur une autre entrée le signal d'émission, donnant ainsi en 50 le signal de battement mentionné plus haut, qui est appliqué, via le convertisseur analogique-numérique 12, au circuit d'analyse spectrale 14.

La synchronisation de l'ensemble est assurée par les divers signaux de commande reçus ou émis par les circuits numériques 14, 16 et 18. Ainsi, le circuit 18 reçoit un signal de "dent de scie logique" DDSL pendant la durée de la production de la dent de scie, pour inhiber les circuits lors de la rupture de phase entre deux dents de scie consécutives, et émet en direction du circuit d'analyse spectrale 14 un signal VALDDS indiquant la validité des échantillons : il s'agit d'un signal carré correspondant soit à la génération de la rampe moins le nombre d'échantillons pendant le temps de transit aller-retour entre le sol et l'aéronef, et donc au passage en émission, soit au silence radio ; ce signal VALDDS est élaboré essentiellement à l'aide du signal DDSL et il est utilisé par le circuit d'analyse spectrale 14 pour connaître la validité du signal, c'est-à-dire pour éliminer les échantillons de signal entre deux rampes successives.

Le circuit d'interface 18 émet également en direction du circuit 14 des signaux DACQ et DCAL de demande d'acquisition et de demande de calcul et reçoit de ce dernier des signaux FACQ et FCAL indiquant l'achèvement de l'exécution de ces demandes.

Le circuit d'interface 18 reçoit de l'unité de calcul 16 un signal MODE, un signal de demande d'émission DEM en mode discontinu, un signal DSPC de demande de calcul de spectre, pour le pilotage du circuit 14, et retourne à l'unité de calcul 16 un signal FSPC indiquant la disponibilité du spectre une fois que celui-ci a été complètement calculé par le circuit 14 ; le signal MODE indique que, l'émission s'effectuant en continu ou en discontinu, le mode de fonctionnement est en traitement continu ou discontinu.

L'unité de calcul 16 peut alors lire, par le bus 52, les résultats de l'analyse spectrale produits par le circuit 14 ; cette lecture est commandée par le signal LEC.

Enfin, le type de méthode analysé peut être sélectionné, à la demande par l'unité de calcul 16, par un signal de programmation PGM délivré au circuit d'analyse spectrale 14 et au circuit d'interface 18.

Le spectre lu par l'unité de calcul 16 pourra être analysé par un logiciel connu d'extraction, l'information de hauteur étant alors délivrée sur le bus d'entrée/sortie E/S.

En mode de fonctionnement en traitement continu, l'émission du signal radio étant continue, le système dispose de la totalité du temps pour effectuer ses traitements.

L'unité de calcul 16 provoque le début d'une suite de traitements, lié au début d'une nouvelle rampe de modulation. Le circuit 18 produit alors un signal RAZ d'initialisation du générateur 20, déclenche le passage en émission et transmet l'ordre de début de traitement DACQ au circuit d'analyse spectrale 14.

Les échantillons sont obtenus et les coefficients d'autocorrélation $R_O...R_M$ sont calculés, de manière en elle-même connue ; il suffit de se référer au brevet FR-A-2 650 413 précité pour cet aspect du calcul, ainsi que pour les autres aspects du calcul.

Une première possibilité consiste, notamment si la rampe est assez longue, à opérer l'analyse spectrale en permanence, en réitérant cette analyse et en délivrant une pluralité de résultats successifs jusqu'à la fin de la dent de scie. La disponibilité des résultats est signalée au circuit 18 par le signal FCAL indicateur de fin de calcul de spectre, signal transmis à l'unité de calcul 16 par le signal de fin de spectre FSPC. Cette manière de procéder permet d'accroître au maximum le rythme de sortie des spectres pour certaines méthodes d'analyse.

La seconde possibilité consiste à n'activer la ressource d'analyse spectrale que sur demande de l'unité de calcul 16. Dans ce cas, l'unité 16 produit une demande de calcul de spectre DSPC au circuit d'interface 18, lorsqu'il nécessite une estimation spectrale, généralement de façon régulière. Cette demande de calcul de spectre DSPC est transmise à l'interface de contrôle 18 qui avertit à son tour, par le signal DCAL, le circuit d'analyse spectrale 14, qui émettra le signal FCAL lorsque les résultats seront disponibles.

C'est cette possibilité qui sera utilisée dans le cas particulier de l'invention, qui s'applique aux dents de scie courtes et qui prévoit de calculer des coefficients d'autocorrélation "globaux" sur la base d'échantillons concernant non seulement une dent de scie mais également des dents de scie antérieures.

Il est à noter que dans tous les cas, pour le calcul d'un coefficient local, seuls sont pris en compte les échantillons qui appartiennent à une dent de scie, ceux correspondant à des coupures entre deux dents de scie étant éliminés, de manière à s'affranchir des ruptures de phase entre dents de scie successives.

Entre deux déclenchements de suites de traitements, le circuit d'analyse spectrale 14 assure la gestion de ses ressources internes de manière autonome, mise à part l'option de demande de spectre par le microprocesseur.

Pour la mise en oeuvre de l'invention, les coefficients d'autocorrélation $R_O...R_M$ sont calculés comme indiqué plus haut. Ces coefficients sont qualifiés de "locaux", car ils concernent une seule et même dent de scie. Le brevet FR-A-2 586 312 décrit en détail la manière d'obtenir ces coefficients d'autocorrélation.

Ces coefficients locaux sont calculés systématiquement pour chacune des dents de scie reçues.

Après avoir ainsi déterminé une pluralité, généralement de 2 à 32, de coefficients d'autocorrélation locaux, les coefficients locaux correspondant à la dernière dent de scie reçue sont combinés linéairement avec ceux correspondant aux dents de scie précédentes, pondérés par un "facteur d'oubli", c'est-à-dire un facteur permettant de donner un poids moins important aux coefficients locaux antérieurs les plus anciens.

De cette combinaison linéaire est déduite une série de coefficients d'autocorrélation qui sont qualifiés de "globaux" :

$$R_{0g}(n) = R_0(n) + \lambda_{n-1} R_{0g}(n-1) + \ldots$$
$$\ldots \qquad \ldots \qquad \ldots \quad \ldots$$
$$R_{Mg}(n) = R_M(n) + \lambda_{n-1} R_{Mg}(n-1) + \ldots$$

avec, à gauche des signes égal, les coefficients globaux issus de la $n^e$ dent de scie et, à droite, dans l'ordre, les coefficients locaux de la $n^e$ dent de scie, puis les coefficients globaux issus de la $(n-1)^e$ dent de scie, affectés d'un poids $\lambda_{n-1}$ et, non écrits, les coefficients avec leurs poids, relatifs aux dents de scie plus anciennes : $(n-2)^e, \ldots$

Ainsi, ces coefficients d'autocorrélation "globaux" concernent une pluralité de dents de scie, et l'autocorrélation s'étend donc au-delà d'une dent de scie, à la différence des méthodes antérieures où l'autocorrélation était limitée à une seule et même rampe, comme dans le cas des brevets FR-A-2 586 312 et FR-A-2 650 413 précités.

Cette méthode d'autocorrélation récursive peut être schématisée, en ce qui concerne le calcul des coefficients d'autocorrélation globaux, par l'algorithme suivant, présenté en métalangage :

Fixation des paramètres de départ :

    ORDRE = nombre de 2 à 32
    OUBLI = valeur $2^{-M}$, avec M choisi entre 11 et 16
            (OUBLI : WEIGHTING FACTOR dans la littérature anglo-saxonne)

Initialisations :

Pour k = O à ORDRE :

$$\{$$
$$R_{global}[k] = O$$

$$R_{local}[k] = 0$$
$$\}$$
$$CPT = 0$$

"Boucle" :

Pour chaque échantillon $x_i$ (i = 0 à N-1) de la rampe j :

$$\{$$

Pour k = 0 à min(i,ORDRE)
$$R_{local}[k] = R_{local}[k] + x_i * x_{i-k}$$
$$CPT = CPT + 1$$
$$\}$$

À la fin de la rampe j :

$$\{$$

Pour k = 0 à ORDRE :

$$\{$$
$$R_{global}[k] = R_{global}[k] (1 - CPT * OUBLI) + R_{local}[k]$$
$$R_{local} = 0$$
$$\}$$
$$CPT = 0$$
$$\}$$

Attente d'une nouvelle rampe :
Pour chaque coup d'horloge d'échantillonnage :

$$CPT = CPT + 1$$

À l'arrivée d'une nouvelle rampe, reboucler sur BOUCLE.

Une fois les coefficients globaux ainsi obtenus, il leur est appliqué une méthode globale d'estimation basée sur des coefficients de prédiction linéaire, par exemple la méthode de Levinson et plus généralement une méthode des moindres carrés ou encore une transformée de Fourier de ces coefficients d'autocorrélation, pour obtenir une série de coefficients de prédiction linéaire $A_i$ qui permettront de restituer les composantes spectrales du signal étudié.

Ces étapes de détermination des coefficients de prédiction et de restitution des composantes spectrales sont en elles-mêmes connues, à la différence - essentielle - que dans les méthodes antérieures elles étaient appliquées soit aux échantillons eux-mêmes, soit à des coefficients d'autocorrélation locaux, alors que dans la présente invention elles sont appliquées aux coefficients d'autocorrélation globaux, tels que définis ici.

Il est à noter que le circuit d'analyse spectrale 14 peut utiliser les coefficients d'autocorrélation calculés à tout instant, que ce soit pendant la réception d'une rampe ou dans l'intervalle de temps séparant deux rampes, le dispositif prélevant alors l'ensemble des $R_{global}$ (k).

Par ailleurs, de manière paramétrable par l'utilisateur, après détermination des $R_{global}(k)$, le système peut choisir de remettre à zéro ces coefficients, ou bien de les laisser inchangés ; ces possibilités sont utilisées par exemple après une réinitialisation ou lors des dents de scie longues.

En ce qui concerne le paramètre d'oubli exponentiel $\lambda$ qui relie les coefficients calculés localement sur une rampe aux coefficients globaux, ces paramètres sont apparentés à la variable OUBLI de la façon suivante : $\lambda = (1-OUBLI)$ est l'"oubli" pour chaque échantillon par rapport au suivant, et donc $\lambda^N = (1-OUBLI)^N$ est l'"oubli" relatif à N échantillons passés. En posant $OUBLI = 1/2^M$, avec M relativement grand devant l'unité, il vient :

$$\lambda^N = 1-(1/2^M)^N \approx 1-N\, 2^{-M},$$

ceci donne pour des valeurs typiques de M comprises entre 11 et 16 un facteur d'oubli pour 1024 échantillons compris respectivement entre 0,5 et 0,985.

Le mode de fonctionnement en traitement discontinu convient pour optimiser la discrétion de l'équipement ou partager la bande de fréquence avec d'autres systèmes.

Un signal isolé est émis ; le circuit acquiert les données pour effectuer l'algorithme et libère la ressource d'émission. Pour effectuer un nouveau traitement, l'unité de calcul 16 doit réitérer une demande d'émission par le signal DEM ; il est à noter que le générateur de rampe n'est pas nécessairement remis à zéro à chaque demande, l'interface de contrôle 18 pouvant gérer la périodicité de la rampe et la demande pouvant être effectuée de façon asynchrone.

Pour chaque nouveau traitement, l'interface de contrôle signale le début d'émission (début d'acquisition DACQ) et se met en attente du signal FACQ indiquant donc la fin de besoin d'acquisition des données. Le début du traitement est alors provoqué (signaux DSPC et DCAL) et la fourniture d'un spectre est attendue (signaux FCAL et FSPC) pendant la phase de traitement ; le circuit d'analyse spectrale opère de manière autonome, et indique par un second signal DACQ la fin de sa période d'acquisition du signal.

**Revendications**

1. Procédé d'analyse spectrale, notamment pour un radioaltimètre de type FM/CW à traitement numérique, comportant des étapes successives suisantes :

   a) moduler en fréquence un signal d'émission selon une loi de variation en dents de scie à fréquence de récurrence donnée,
   b) émettre ce signal modulé, à le recevoir après réflexion et à mélanger le signal reçu au signal émis de manière à donner un signal de battement,
   c) numériser ce signal de battement, de manière à donner une succession d'échantillons numériques de signal délivrés pendant la durée de chaque dent de scie, et
   d) effectuer une analyse spectrale de ces échantillons afin de délivrer une information de spectre,

   **caractérisé en ce que** cette analyse spectrale comporte les étapes suivantes :

   e) déterminer à chaque dent de scie une série de coefficients d'autocorrélation locaux, permettant de définir les composantes spectrales, à partir des échantillons de signal courants c'est-à-dire reçus au cours de cette même dent de scie,
   f) déterminer une série de coefficients d'autocorrélation globaux par calcul d'une somme pondérée des coefficients d'autocorrélation locaux courants et des coefficients d'autocorrélation globaux antérieurs, calculés au cours des dents de scie précédentes,
   g) déterminer à partir des coefficients d'autocorrélation globaux une série de coefficients d'un polynôme prédicteur par l'une des deux méthodes dites respectivement des moindres carrés et de transformée de Fourier,
   h) restituer des composantes spectrales à partir de la série de coefficients d'un polynôme prédicteur ainsi déterminée.

2. Procédé selon la revendication 1, **caractérisé en ce que**, après l'étape f), les coefficients d'autocorrélation globaux sont remis à zéro avant l'itération suivante de cette étape.

3. Procédé selon la revendication 1, **caractérisé en ce que**, après l'étape f), la valeur des coefficients d'autocorrélation globaux est conservée pour l'itération suivante de cette étape.

4. Procédé selon la revendication 1, **caractérisé en ce que** l'étape b) est une étape d'émission continue, **en ce que** les étapes e) à g) sont mises en oeuvre de façon permanente à la fréquence de récurrence des dents de scie, **en ce que** l'étape h) est mise en oeuvre systématiquement, et **en ce qu'**il consiste à délivrer aux circuits de traitement un signal de disponibilité du résultat dès l'achèvement de cette étape h).

5. Procédé selon la revendication 1, **caractérisé en ce que** l'étape b) est une étape d'émission continue, **en ce que** les étapes e) à g) sont mises en oeuvre en continu à la fréquence de récurrence des dents de scie, et **en ce que** l'étape h) est mise en oeuvre de façon conditionnelle sur requête de l'utilisateur de l'information de spectre.

6.  Procédé selon la revendication 1, **caractérisé en ce que** l'étape b) est une étape d'émission discontinue mise en oeuvre pendant une durée limitée au temps nécessaire à l'achèvement de l'étape h).

7.  Procédé selon la revendication 1, **caractérisé en ce que**, lors de l'étape f), pour chaque coefficient d'autocorrélation global, la somme pondérée associe à chaque coefficient d'autocorrélation local antérieur un facteur d'oubli fonction du rang d'ancienneté des coefficients antérieurs de l'échantillon local antérieur considéré.

8.  Procédé selon la revendication 1, **caractérisé en ce que**, le facteur d'oubli est un paramètre exponentiel proportionnel aux durées des dents de scie à l'instant du traitement.

**Patentansprüche**

1.  Verfahren zur Spektralanalyse, insbesondere für einen FM/CW-Funk-Höhenmesser mit digitaler Signalverarbeitung, das die folgenden Schritte aufweist:

    a) ein Sendesignal wird gemäß einem sägezahnförmigen Variationsgesetz mit gegebener Rekurrenzfrequenz moduliert;
    b) dieses modulierte Signal wird ausgesendet, nach Reflexion empfangen und das empfangene Signal wird mit dem Sendesignal gemischt, sodaß sich ein Schwebungssignal ergibt;
    c) dieses Schwebungssignal wird digitalisiert und ergibt eine Folge von digitalen Signaltastproben, die während der Dauer jedes Sägezahns geliefert werden;
    d) eine Spektralanalyse dieser Tastproben wird durchgeführt, um eine Information über das Spektrum zu liefern; **dadurch gekennzeichnet, daß** diese Spektralanalyse die folgenden Schritte enthält:
    e) für jeden Sägezahn wird eine Reihe von lokalen Autokorrelationskoeffizienten bestimmt, die die Definition der spektralen Komponenten ausgehend von den laufenden Signal-tastproben, die während dieses selben Sägezahns empfangen wurden, zu definieren erlauben;
    f) eine Folge von globalen Autokorrelationskoeffizienten wird durch Berechnung einer gewichteten Summe der laufenden lokalen Autokorrelationskoeffizienten und der früheren globalen Autokorrelationskoeffizienten bestimmt, die während der vorhergehenden Sägezähne berechnet wurden;
    g) ausgehend von den globalen Autokorrelationskoeffizienten wird eine Reihe von Koeffizienten eines Vorhersagepolynoms durch die Methode der kleinsten Quadrate oder die Methode der Fourier-Transformierten bestimmt;
    h) Spektralkomponenten werden ausgehend von der so be stimmten Folge von Koeffizienten eines Vorhersagepolynoms rekonstruiert.

2.  Verfahren nach Anspruch 1, **dadurch gekennzeichnet, daß** nach dem Schritt f) die globalen Autokorrelationskoeffizienten vor der nächsten Wiederholung dieses Schritts auf null gesetzt werden.

3.  Verfahren nach Anspruch 1, **dadurch gekennzeichnet, daß** nach dem Schritt f) der Wert der globalen Autokorrelationskoeffizienten für die nächstfolgende Wiederholung dieses Schritts erhalten bleibt.

4.  Verfahren nach Anspruch 1, **dadurch gekennzeichnet, daß** der Schritt b) ein Schritt der kontinuierlichen Aussendung ist, daß die Schritte e) bis g) permanent mit der Wiederholfrequenz der Sägezähne durchgeführt werden, daß der Schritt h) systematisch durchgeführt wird und darin besteht, an die Verarbeitungsschaltungen ein Signal über die Verfügbarkeit des Ergebnisses zu liefern, sobald dieser Schritt h) beendet ist.

5.  Verfahren nach Anspruch 1, **dadurch gekennzeichnet, daß** der Schritt b) ein Schritt der kontinuierlichen Aussendung ist, daß die Schritte e) bis g) kontinuierlich mit der Wiederholfrequenz der Sägezähne durchgeführt werden und daß der Schritt h) nur nach Wunsch des Benutzers der Spektralinformation durchgeführt wird.

6.  Verfahren nach Anspruch 1, **dadurch gekennzeichnet, daß** der Schritt b) ein Schritt der diskontinuierlichen Aussendung ist, der während einer Dauer durchgeführt wird, die auf die für die Durchführung des Schritts h) erforderliche Zeit beschränkt ist.

7.  Verfahren nach Anspruch 1, **dadurch gekennzeichnet, daß** im Schritt f) für jeden globalen Autokorrelationskoeffizienten die gewichtete Summe jedem früheren lokalen Autokorrelationskoeffizient einen "Vergiß"-Faktor zuordnet, der vom Altersrang der früheren Koeffizienten der betrachteten früheren lokalen Tastprobe abhängt.

8. Verfahren nach Anspruch 1, **dadurch gekennzeichnet, daß** der "Vergiß"-Faktor ein exponentieller Parameter ist, der proportional zur Dauer der Sägezähne im Zeitpunkt der Verarbeitung ist.

**Claims**

1. Method of spectral analysis, especially for a digital processing FM/CW type radio altimeter, comprising successive steps as follows:

   a) the frequency modulation of a transmission signal according to a law of variation in sawtooth form at a given recurrence frequency,
   b) the transmission of this modulated signal, and its reception after reflection and the mixing of the received signal with the transmitted signal so as to give a beat signal,
   c) the digitizing of this beat signal so as to give a succession of digital samples of signals delivered for the duration of each sawtooth, and
   d) the performance of a spectral analysis of these samples in order to deliver a spectral information element, **characterized in that** this spectral analysis comprises the following steps:
   e) the determining, at each sawtooth, of a series of local auto-correlation coefficients enabling the definition of the spectral components, on the basis of signal samples that are current, namely received during this same sawtooth,
   f) the determining of a series of global auto-correlation coefficients by the computation of a weighted sum of the current local auto-correlation coefficients and of the prior global auto-correlation coefficients, computed during the previous sawteeth,
   g) the determining, from the global autocorrelation coefficients, of a series of coefficients of a predictive polynomial by one of the two methods respectively known as the least squares method and the Fourier transform method,
   h) the restitution of the spectral components from the series of coefficients of a prediction polynomial thus determined.

2. Method according to Claim 1, **characterized in that**, after the step f), the global auto-correlation coefficients are reset to zero before the following iteration of this step.

3. Method according to Claim 1, **characterized in that**, after the step f), the value of the global auto-correlation coefficients is kept for the following iteration of this step.

4. Method according to Claim 1, **characterized in that** the step b) is a step of continuous transmission, **in that** the steps e) to g) are implemented permanently at the recurrence frequency of the sawteeth, **in that** the step h) is implemented systematically, and **in that** a signal of availability of the result is delivered to the processing circuits as soon as this step h) is completed.

5. Method according to Claim 1, **characterized in that** the step b) is a step of continuous transmission, **in that** the steps e) to g) are implemented continuously at the recurrence frequency of the sawteeth, and **in that** the step h) is implemented conditionally at the request of the user of the spectral information element.

6. Method according to Claim 1, **characterized in that** the step b) is a step of discontinuous transmission implemented during a duration limited to the time needed to complete the step h).

7. Method according to Claim 1, **characterized in that**, during the step f), for each global auto-correlation coefficient, the weighted sum associates, with each prior local auto-correlation coefficient, a forget factor which is a function of the rank of seniority of the prior coefficients of the prior local sample considered.

8. Method according to Claim 1, **characterized in that** the forget factor is an exponential parameter proportional to the durations of the sawteeth at the instant of processing.